# EUROPÄISCHE PATENTSCHRIFT

(11) **EP 0 432 556 B1**
(45) Veröffentlichungstag und Bekanntmachung des Hinweises auf die Patenterteilung: **26.04.1995**
(21) Anmeldenummer: 90122536.7
(22) Anmeldetag: 26.11.1990
(51) Int. Cl.: H04J 3/16, H04J 3/07

(54) **Verfahren zum Übertragen von 1544- bzw. 6312-kbit/s-Signalen über 2048- bzw. 8448-kbit/s-Strecken in der Synchron-Digital-Multiplexhierarchie**
Method for the transmission of 1544 and/or 6312 kbit/s signals over 2048 and/or 8448 kbit/s links in the synchronous digital multiplex hierarchy
Méthode de transmission des signaux à 1544 kbits/s, respectivement 6312 kbit/s sur des liaisons à 2048 kbit/s, respectivement 8448 kbit/s d'un multiplex hierarchie synchrone et numérique

(30) Priorität: 12.12.1989 DE 3941050
(43) Veröffentlichungstag der Anmeldung: 19.06.1991
(73) Patentinhaber: SIEMENS AKTIENGESELLSCHAFT, 80333 München (DE)
(72) Erfinder: Müller, Horst, W-8021 Hohenschäftlarn (DE)

(56) Entgegenhaltungen:
- EP-A- 0 320 856
- GB-A- 2 125 256
- IEEE Global Telecommunications Conference & Exhibition 1988; Hollywood, US; 28 November - 01 Dezember 1988. Bd. 1, Seiten 118-124; K.ASATANI: "Network node interface for new synchronous digital networks".
- IEEE COMMUNICATIONS MAGAZINE. Bd. 24, Nr. 4, April 1986, NEW YORK, US Seiten 12-17; N.F.DINN et al.: "Digital interconnection of dissimilar digital networks".

## Beschreibung

In Europa und anderen Ländern wird eine plesiochrone Digitalsignal-Hierarchie mit Bitraten von 2048 kbit/s, 8448 kbit/s, 34368 kbit/s und 139264 kbit/s und in Nordamerika eine mit Bitraten von 1544 kbit/s, 6312 kbit/s und 44736 kbit/s verwendet. Eine Synchron-Digital-Multiplexhierarchie mit einer Basisbitrate von 155520 kbit/s ist in den CCITT-Empfehlungen G.707, G.708 und G.709 definiert und für einen weltweiten Gebrauch vorgesehen. In dieser sollen die Digitalsignale der plesiochronen Digitalsignal-Hierarchien übertragen werden können.

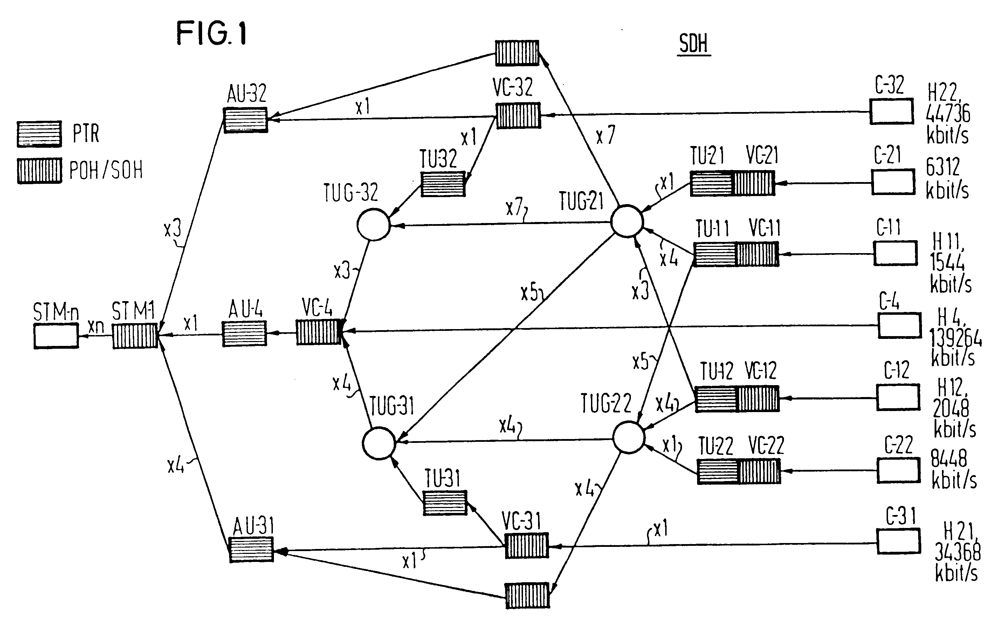

Eine in Figur 1 gezeigte Multiplexstruktur wurde beim TM3-Treffen (Transmission and Multiplexing) in Brüssel vom 24. bis 28.4.1989 des European Transmission Standards Institut ETSI vorgestellt. Für die Übertragung von 1544- und 6312-kbit/s-Signalen der US-Hierarchie in dem europäischen Teil der Synchron-Digital-Multiplexhierarchie wurde beim TM3-Treffen in Aveiro vom 23. bis 28.10.1989 des ETSI in Temporary Documents No. 106, 117, 127 und 136 Modifikationen dieser Multiplexstruktur vorgeschlagen.

Aufgabe der Erfindung ist es, für eine Übertragung dieser 1544- bzw. 6312-kbit/s-Signale über 2048- bzw. 8448-kbit/s-Strecken in der bestehenden plesiochronen Digitalsignal-Hierarchie eine Lösung anzugeben.

Diese Aufgabe wird erfindungsgemäß mit den Merkmalen des Anspruchs 1 gelöst. Ausgestaltungen der Erfindung sind den Unteransprüchen zu entnehmen.

Dieses Verfahren bietet den Vorteil, daß der später näher erläuterte, für die Überwachung des Nutzsignals von der Quelle bis zur Senke vorgesehene Pfadrahmenkopf (Path Overhead) über die 2048- bzw. 8448-kbit/s-Strecken bis zum Endgerät übertragen werden kann.

Anhand von Ausführungsbeispielen wird die Erfindung nachstehend näher erläutert.
- Figur 1: zeigt eine Multiplexstruktur der Synchron-Digital-Multiplexhierarchie SDH,
- Figur 2: zeigt eine Anordnung mit einem nordamerikanischen und einem europäischen SDH-Netz,
- Figur 3: zeigt eine Anordnung nach Figur 2 mit einer Umsetzereinrichtung zwischen dem nordamerikanischen und europäischen SDH-Netz,
- Figur 4: zeigt eine erste Multiplexstruktur der Synchron-Digital-Multiplexhierarchie mit erfindungsgemäßen Abschnitten,
- Figur 5: zeigt eine zweite Multiplexstruktur der Synchron-Digital-Multiplexhierarchie mit den gleichen erfindungsgemäßen Abschnitten,
- Figur 6: zeigt einen Untersystemeinheiten-Überrahmen, ein Einfügen eines VC-11-Signals in ein VC-12*- Signal und ein Einfügen eines VC-21-Signals in ein VC-22*- Signal,
- Figur 7: zeigt ein Einfügen von Virtualcontainern VC-11 in einen Virtualcontainer VC-4,
- Figur 8: zeigt ein Blockschaltbild für Übertragung von 1544-kbit/s-Signalen über 2048-kbit/s-Strecken nach Figur 4,
- Figur 9: zeigt die Einfügung eines 1544-kbit/S-Signals in ein 2048-kbit/s-Signal,
- Figur 10: zeigt ein Blockschaltbild für Übertragung von 6312-kbit/s-Signalen über 8448-kbit/s-Strecken nach Figur 4,
- Figur 11: zeigt ein Blockschaltbild für Übertragung von 1544-kbit/s-Signalen über 2048-kbit/s-Strecken nach Figur 5 und
- Figur 12: zeigt ein Blockschaltbild für Übertragung von 6312-kbit/s-Signalen über 8448-kbit/s-Strecken nach Figur 5.

Figur 1 zeigt die Multiplexstruktur nach dem Vorschlag bei dem ETSI. Es bedeutet AU Verwaltungseinheit (Administrative Unit), C Container, H Digitalsignal, POH Pfadrahmenkopf (Path Overhead), PTR Zeiger (Pointer), SOH Abschnittskopf (Section Overhead), STM Synchrones Transport-Modul, TU Untersystemeinheit (Tributary Unit), TUG Untersystemeinheitengruppe (Tributary Unit Group) und VC Virtualcontainer.

Die zu übertragenden Digitalsignale werden am Eingangsknoten zum synchronen Netz mittels positivem Stopfen in Container C-n eingefügt, wobei n für eine der in Figur 1 angegebenen Zahlen steht. Jeder Container wird durch Hinzufügen eines Pfadrahmenkopfes POH zu einem Virtualcontainer VC-n ergänzt, die periodisch übertragen werden. Das erste Byte eines Virtualcontainers wird durch einen Zeiger PTR angegeben, dessen zeitliche Lage im Übertragungsrahmen festgelegt ist. Als solcher dient in der Regel der Virtualcontainer einer höheren Hierarchiestufe. Ein Virtualcontainer VC-n bildet mit dem ihm zugeordneten Zeiger PTR eine Untersystemeinheit TU-n. Mehrere dieser Untersystemeinheiten gleichen Aufbaus können wieder zu einer Untersytemeinheitsgruppe TUG-n zusammengefaßt werden. In den oben genannten CCITT-Empfehlungen sind Untersystemeinheitsgruppen TUG-21 für die 1,5-Mbit/s-Hierarchie und TUG-22 für die 2-Mbit/s-Hierarchie genannt.

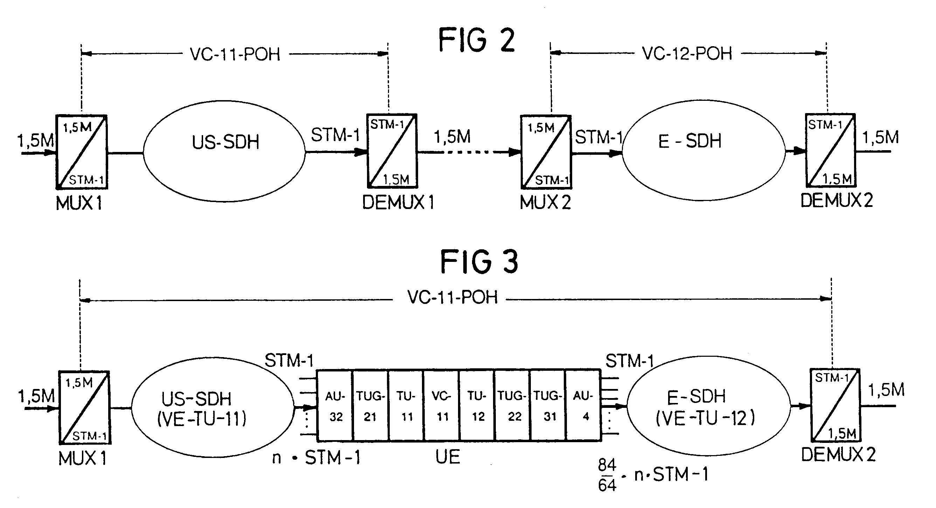

Figur 2 zeigt eine erste Möglichkeit 1544-kbit/s-Signale aus der nordamerikanischen in die europäische Synchron-Digital-Multiplexhierarchie zu übertragen. Die Anordnung enthält ein nordamerikanisches Netz US-SDH, ein europäisches Netz E-SDH, Multiplexgeräte MUX1 und MUX2 sowie Demultiplexgeräte DEMUX1 und DEMUX2.

In dem Multiplexgerät MUX1 werden 1544-kbit/s-Signale nach der CCITT-Empfehlung G.709 in Container C-11, Virtualcontainer VC-11, Untersystemeinheiten TU-11 und zuletzt in ein synchrones Transport-Modul STM-1 eingefügt. Dieses wird über das Netz US-SDH dem Demultiplexgerät DEMUX1 zur Abtrennung der 1544-kbit/s-Signale zugeführt. Diese werden dann in einer plesiochronen Digitalsignal-Hierarchie zum Multiplexer MUX2 in Europa übertragen, in dem sie nach einem im folgenden näher beschriebenen Verfahren in Untersystemeinheiten TU-12 und letztlich wieder in ein synchrones Transport-Modul STM-1 verpackt werden. Dieses wird nach einem Durchqueren des europäischen Netzes E-SDH zum Demultiplexer DEMUX2 geführt, in dem aus ihm die 1544-kbit/s-Signale wieder abgetrennt werden.

Vom Multiplexgerät MUX1 bis zum Demultiplexgerät DEMUX1 wird der Container C-11 von einem Pfadrahmenkopf VC-11-POH begleitet. Im Multiplexgerät MUX2 wird dann ein neuer Pfadrahmenkopf VC-12-POH eingeführt, der die 1544-kbit/s-Signale bis zum Demultiplexgerät DEMUX2 begleitet.

Figur 3 zeigt eine zweite Möglichkeit, 1544-kbit/s-Signale aus dem nordamerikanischen Netz US-SDH zum europäischen Netz E-SDH zu übertragen. Das Demultiplexgerät DEMUX1 und das Multiplexgerät MUX2 der Anordnung nach Figur 2 wird bei dieser durch eine Umsetzeinrichtung UE ersetzt, die entweder in Nordamerika oder in Europa angeordnet ist.

In der Umsetzeinrichtung UE werden aus dem nordamerikanischen Netz US-SDH mit der Verteilebene TU-11 stammende synchrone Transport-Module STM-1 entsprechend ihrer Aufbau- und Abbauvorschrift in Verwaltungseinheiten AU-32, in Untersystemeinheitengruppen TUG-21, in Untersystemeinheiten TU-11 und in Virtualcontainer VC-11 zerlegt und anschließend über Untersystemeinheiten TU-12, Untersystemeinheitengruppen TUG-22, Untersystemeinheitengruppen TUG-31 und Verwaltungseinheiten AU-4 zu neuen synchronen Transport-Modulen STM-1 zusammengefaßt, die im europäischen Netz E-SDH in einer Verteilebene VE-TU-12 verarbeitet werden können.

In einem STM-1-Signal, das über TU-11-Signale aufgebaut ist, können vierundachtzig 1544-kbit/s-Signale untergebracht werden. In einem STM-1-Signal, das über TU-12-Signale aufgebaut ist, können dagegen nur maximal vierundsechzig TU-12-Signale untergebracht werden, die jeweils mit einem 1544-kbit/s-Signal belegt sind. So müssen für n STM-1-Signale aus dem nordamerikanischen Netz US-SDH insgesamt 84/64 x n x STM-1-Signale des europäischen Netzes E-SDH vorgesehen werden.

Im Gegensatz zur Anordnung nach Figur 2 ist hier eine durchgehende Überwachung mit nur einem Pfadrahmenkopf VC-11-POH vom Multiplexgerät MUX1 bis zum Demultiplexgerät DEMUX2 möglich.

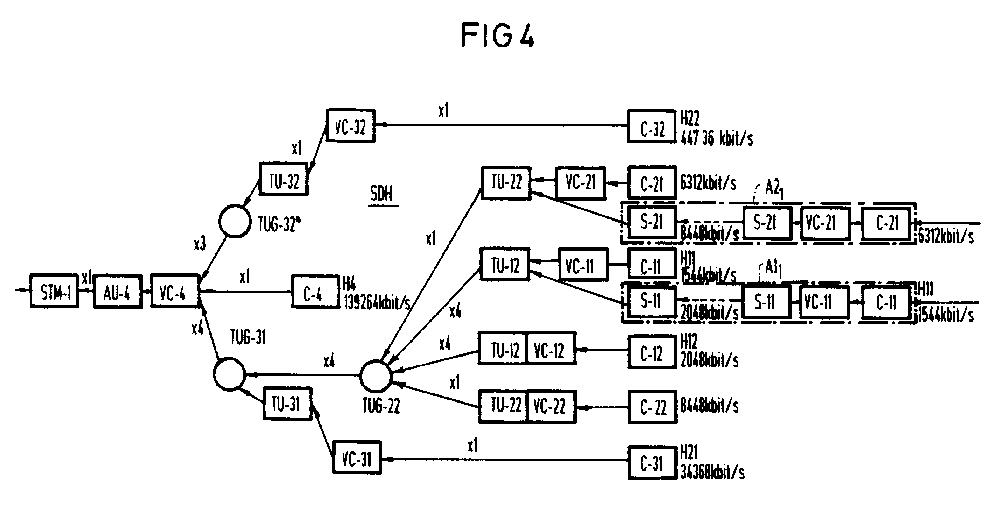

Figur 4 zeigt eine Multiplexstruktur nach dem eingangs genannten Temporary Document No. 136, die hier um Abschnitte A1₁ und A2₁ erweitert ist. Gegenüber der Multiplexhierarchie nach Figur 1 fehlen die nordamerikanischen Untersystemeinheiten TU-11 und TU-21 sowie die Untersystemeinheitengruppe TUG-21. Der Stern bei der Untersystemeinheitengruppe TUG-32 weist darauf hin, daß diese fehlenden Einheiten dort prinzipiell angeschlossen werden können. Im Gegensatz zur Multiplexhierarchie nach Figur 1 gehen die Virtualcontainer VC-11 und VC-21 in Untersystemeinheiten TU-12 und TU-22 auf.

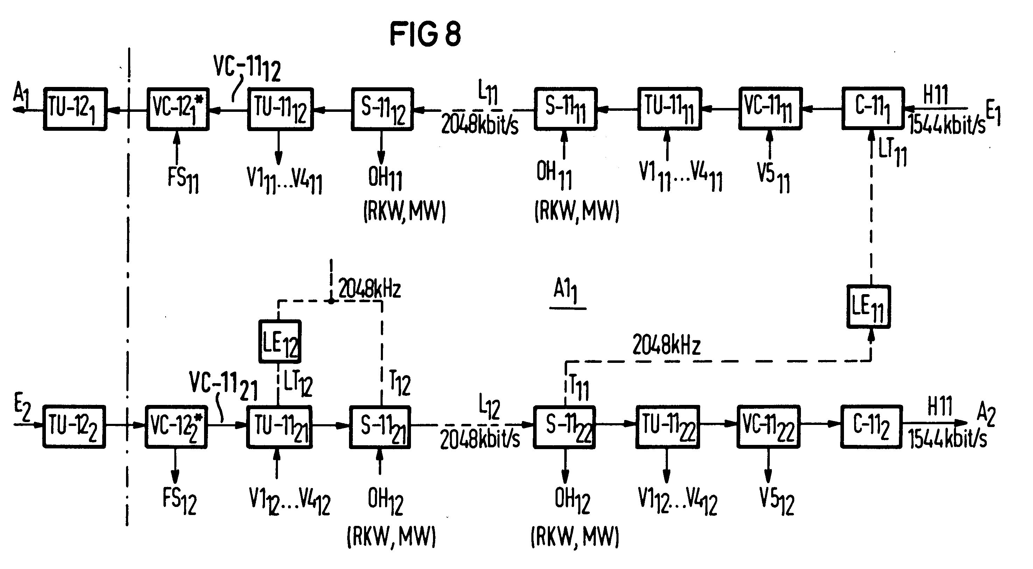

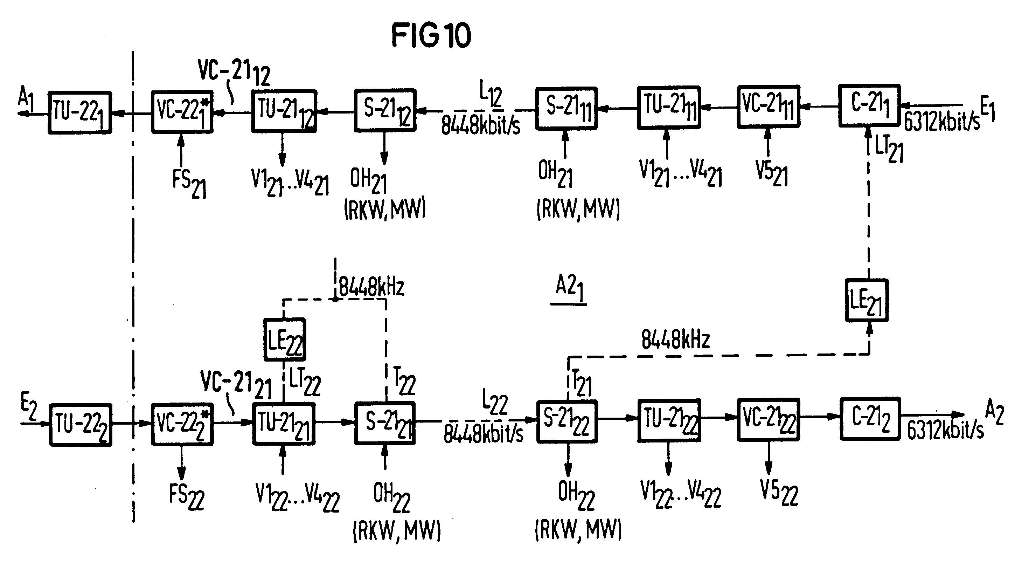

Erfindungsgemäß kann im Abschnitt A1₁ zwischen dem Erzeugungsort des Virtualcontainers VC-11 und dem Erzeugungsort der Untersystemeinheit TU-12 eine 2048-kbit/s-Strecke eingefügt werden, über die ein Streckencontainer S-11 übertragen wird. Entsprechend ist im Abschnitt A2₁ zwischen dem Entstehungsort des Virtualcontainers VC-21 und dem Entstehungsort der Untersystemeinheit TU-22 eine 8448-kbit/s-Strecke eingefügt, über die ein Streckencontainer S-21 übertragen wird. Beides wird anhand der Figuren 8 und 10 näher erläutert.

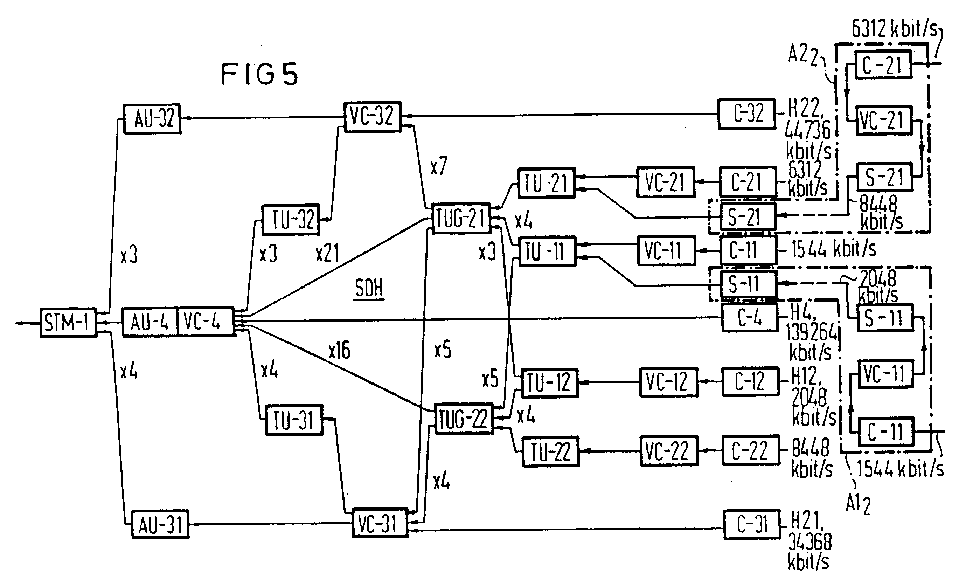

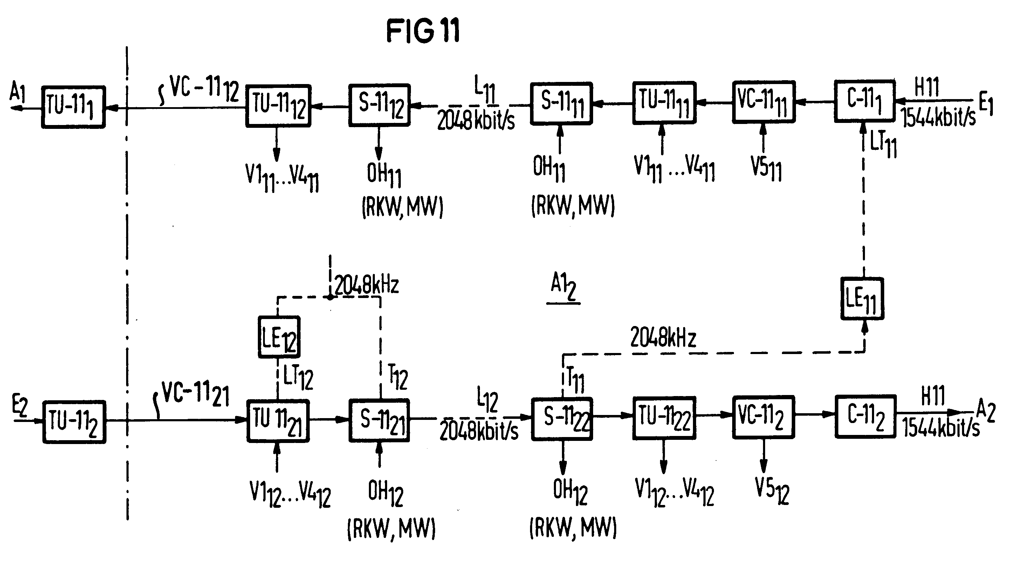

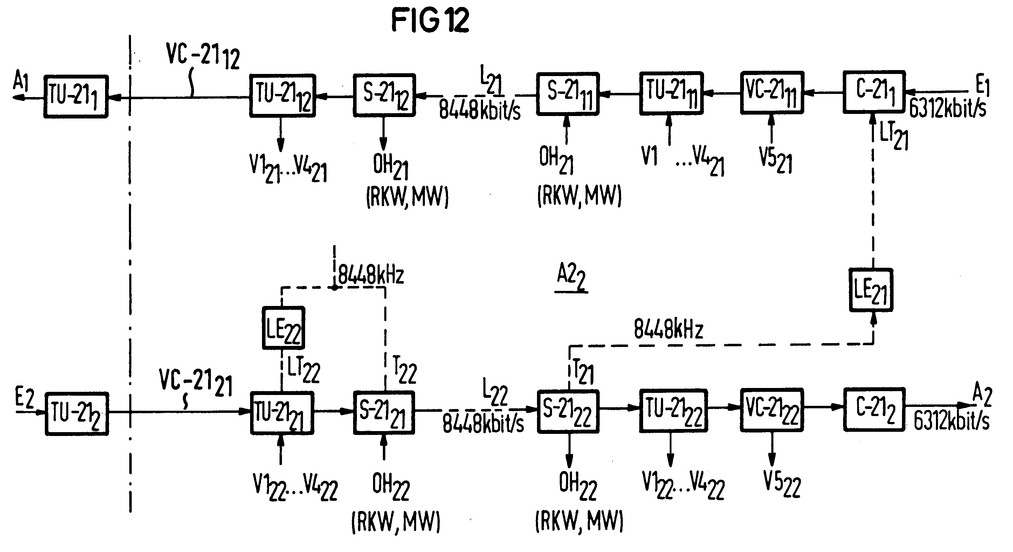

Figur 5 zeigt eine weitere Multiplexstruktur, in der Abschnitte A1₂ und A2₂ mit Untersystemeinheiten TU-11 und TU-21 in Verbindung stehen. Beides wird anhand der Figuren 11 und 12 detaillierter dargestellt.

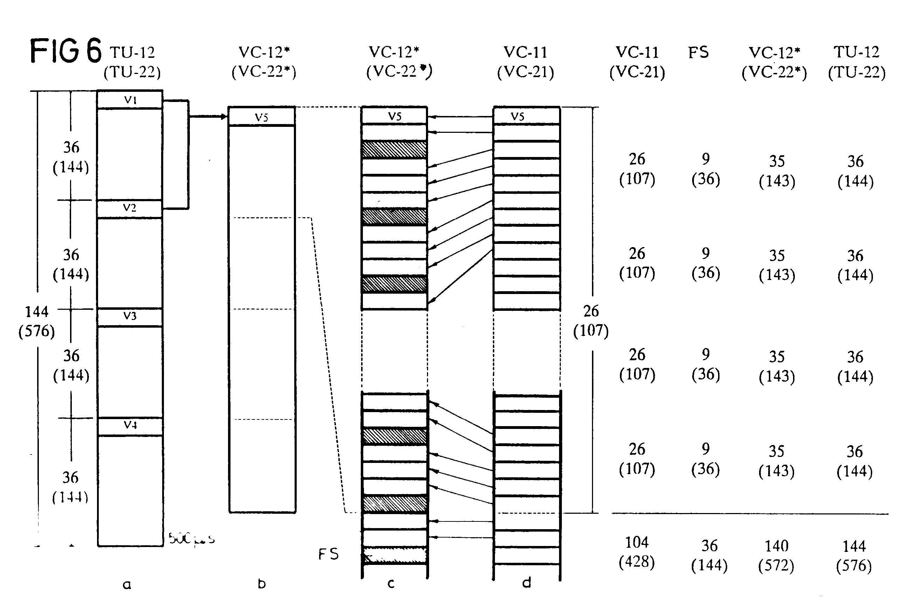

Wie Figur 6 entsprechend der CCITT-Empfehlung G.709 in Säule a zeigt, sind die Untersystemeinheiten TU-12 oder TU-22 in Überrahmen zu je 500 »s eingeteilt. Ein solcher enthält vier Rahmen mit einer Periodendauer von jeweils 125 »s. Das erste Byte V1, V2, V3 und V4 der Rahmen ist in der CCITT-Empfehlung G.709 festgelegt. Ohne diese Bytes enthält der Überrahmen nach Säule b Rahmen mit Virtualhilfscontainern VC-12* oder VC-22*, die jeweils mit einem Byte V5 als Pfadrahmenkopf beginnen.

Wird davon ausgegangen, daß ein 1544-kbit/s-Signal in bekannter Weise erst in einen Container C-11 und dann in einen Virtualcontainer VC-11 umgesetzt wurde, kann das VC-11-Signal (weiße Felder), wie es in Säule d dargestellt ist, durch Hinzufügen von Stopfbytes FS (schraffierte Felder) zu einem VC-12*-Signal nach Säule c aufgefüllt werden, wobei der erste Rahmen gezeigt ist. Das ursprüngliche VC-11-Signal umfaßt 104 byte pro Überrahmen, wobei pro Rahmen 26 byte vorgesehen sind. Für das VC-12-Signal sind dagegen pro Überrahmen 140 byte und pro Rahmen 35 byte vorgesehen.

Die Stopfbytes FS sind möglichst gleichmäßig verteilt, um Pufferspeicherkapazität zu sparen. Für den zweiten, dritten und vierten Rahmen wird das gleiche Schema angewendet.

Wird weiter davon ausgegangen, daß ein 6312-kbit/s-Signal in bekannter Weise erst in einen Container C-21 und dann in einen Virtualcontainer VC-21 umgesetzt wurde, kann man das VC-21-Signal (weiße Felder), wie es in Säule d dargestellt ist, durch Hinzufügen von Stopfbytes (schraffierte Felder) FS zu einem VC-22^{*}-Signal nach Säule c auffüllen, wie es für den ersten Rahmen gezeigt ist. Das ursprüngliche VC-21-Signal umfaßt pro Überrahmen 428 byte und pro Rahmen 107 byte. Für das VC-22-Signal sind pro Überrahmen 572 byte und pro Rahmen 143 byte vorgesehen. Die Stopfbytes FS sollen auch hier möglichst gleichmäßig verteilt sein. Für den zweiten, dritten und vierten Rahmen wird das gleiche Schema angewendet.

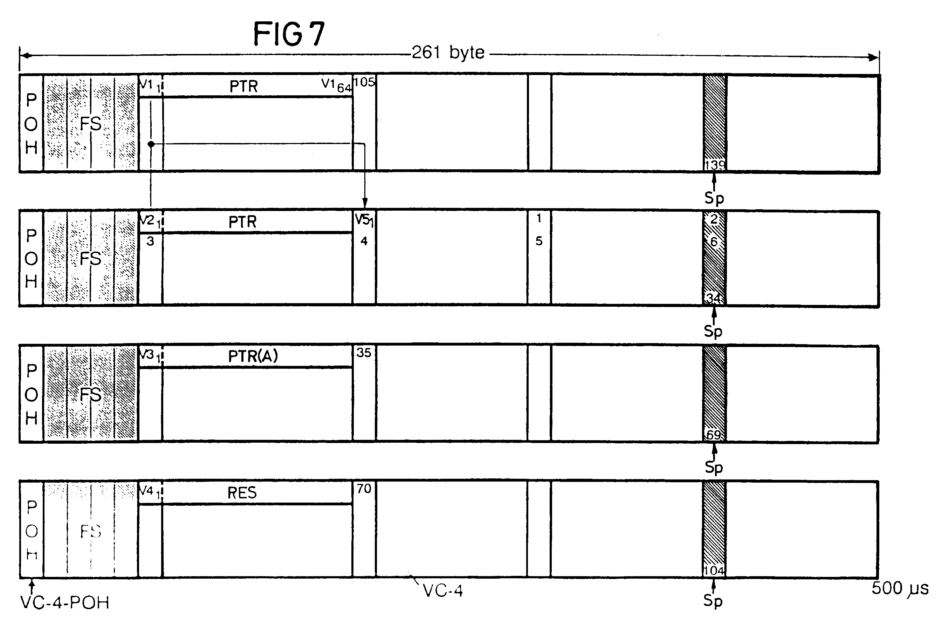

In Figur 7 ist dargestellt, wie ein VC-11-Signal nach einem Verpacken in einen Virtualhilfscontainer VC-12* und Einfügen in eine Untersystemeinheit TU-12 gemäß Figur 5 in ein VC-4-Signal eingespeist wurde.

Die Zeigerbytes V1₁ und V2₁ geben die Position des Pfadrahmenkopf V5₁ und damit den Anfang des VC-11- bzw. VC-12*-Signals an. V3₁ ist ein Zeigerbyte (Aktion) PTR(A), das im Falle eines Negativstopfens ein Informationsbyte des VC-11- bzw. VC-12*-Signals ist, und V4₁ stellt eine Reserve RES dar. Die Spalte Sp wird von einem Virtualcontainer VC-11 nicht benutzt. Das TU-12-Signal belegt jeweils vier Spalten des VC-4-Signals, wobei pro Spalte 9 byte übertragen werden. Es verbleibt Platz für dreiundsechzig weitere TU-12-Signale.

Figur 8 zeigt ein Blockschaltbild des Abschnitts A1₁ und der Untersystemeinheit TU-12 in Figur 4 für die Übertragung von 1544-kbit/s-Signalen über 2048-kbit/s-Strecken L₁₁ und L₁₂. Es enthält Funktionseinheiten Container C-11₁ und C-11₂, Virtualcontainer VC-11₁₁ und VC-11₂₂, Streckencontainer S-11₁₁, S-11₁₂, S-11₂₁ und S-11₂₂, Untersystemeinheiten TU-11₁₁, TU-11₁₂, TU-11₂₁ und TU-11₂₂, Virtualhilfscontainer VC-12₁* und VC-12₂*, Untersystemeinheiten TU-12₁ und TU-12₂ und Lückentakterzeuger LE₁₁ und LE₁₂.

Ein in den Eingang E₁ eingespeistes 1544-kbit/s-Signal wird mit einem 2048-kHz-Lückentakt LT₁₁ in den Container C-11₁ gestopft. Der 2048-kHz-Lückentakt LT₁₁ ist aus einem aus einer Einheit der Gegenrichtung abgeleiteten 2048-kHz-Takt T₁₁ hergeleitet, wobei Lücken für den später einzufügenden Kopf OH₁₁ und für die ebenfalls einzufügenden Zeigerbytes V1₁₁ bis V4₁₁ eingeblendet werden. Im Funktionsblock VC-11₁₁ wird der Pfadrahmenkopf V5₁₁ zum Container C-11₁, und in der Funktionseinheit TU-11₁₁ werden die Zeigerbytes V1₁₁ bis V4₁₁ hinzugefügt. Diese müssen in dieser Übertragungsrichtung aber nicht aktiviert werden, da die Synchronisierung auf den 2048-kHz-Takt T₁₁ bereits im Funktionsblock für den Container C-11₁ stattgefunden hat. Im Funktionsblock des Streckencontainers S-11₁₁ wird weiter der Kopf OH₁₁ eingeblendet.

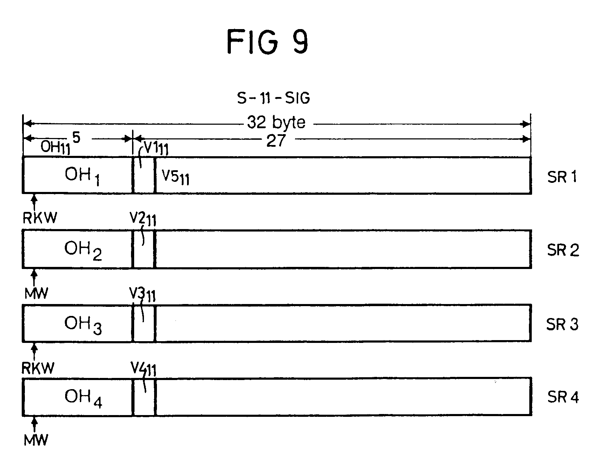

Wie Figur 9 zeigt, ist der Rahmen SR1, SR2, SR3 bzw. SR4 des S-11₁₁-Signals S-11₁-SIG mit einem VC-11₁₁-Signal und einem viergeteilten (OH₁ bis OH₄) Kopf OH₁₁ und den Zeigerbytes V1₁₁ bis V4₁₁ somit 32 byte lang und entspricht damit der Länge und der Frequenz eines PCM30-Rahmens. Damit dieses S-11₁₁- Signal auch über spezielle Einrichtungen übertragen werden kann, die abwechselnd ein Rahmenkennungswort RKW und ein Meldewort MW des PCM30-Signals erwarten, werden diese als erste Bytes im Kopf OH₁₁ rahmenweise abwechselnd eingesetzt. Der Kopf OH₁₁ beinhaltet ferner eine Überrahmenkennung, da jeweils vier Rahmen R1 bis R4 einen Überrahmen bilden, wobei das VC-11₁-Signal im ersten Rahmen R1 mit dem Pfadrahmenkopf V5₁₁ beginnt.

Nach der Übertragung des Streckencontainers S-11₁₁ über die 2048-kbit/s-Strecke L₁₁ werden im Funktionsblock des Streckencontainers S-11₁₂ der Kopf OH₁₁ und im Funktionsblock der Untersystemeinheit TU-11₁₂ die Zeigerbytes V1₁₁ bis V4₁₁ wieder entfernt. Das damit zurückgewonnene VC-11₁₂-Signal wird zur Bildung eines Virtualhilfscontainers VC-12₁*mit Stopfbytes FS₁₁ entsprechend dem Schema nach Figur 6 aufgefüllt. Dieses VC-12₁*-Signal wird nun in bekannter Weise wie ein VC-12-Signal behandelt und in die Untersystemeinheit TU-12₁ eingefügt, die über den Ausgang A₁ abgegeben wird. Einer am Eingang E₂ ankommenden Untersystemeinheit TU-12₂ wird ein Virtualhilfscontainer VC-12₂^{*} entnommen. Durch Abzweigung von Stopfbytes FS₁₂ entsteht mit Hilfe eines 2048-kHz-Lückentaktes LT₁₂ und Einspeisung von Zeigerbytes V1₁₂ bis V4₁₂ eine Untersystemeinheit TU-11₂₁. Durch Hinzufügung eines Kopfes OH₁₂, der ein Rahmenkennungswort RKW und ein Meldewort MW enthalten kann, wird mit Hilfe eines 2048-kHz-Taktes T₁₂ ein Streckencontainer S-11₂₁ gebildet.

Der Lückentakt LT₁₂ wird aus dem Takt T₁₂ abgeleitet, wobei der Lückentakterzeuger LE₁₂ eine Lücke für den Kopf OH₁₂ und die Zeigerbytes V1₁₂ bis V4₁₂ vorsieht.

Der Streckencontainer S-11₂₁ wird über die 2048-kbit/s-Strecke L₁₂ übertragen. In der Funktionseinheit Streckencontainer S-11₂₂ wird der Kopf OH₁₂ wieder entfernt und der Takt T₁₁ abgeleitet. Durch Entnahme der Zeigerbytes V1₁₂ bis V4₁₂ wird eine Untersystemeinheit TU-11₂₂ und durch Wegnahme des Pfadrahmenkopfes V5₁₂ ein Virtualcontainer VC-11₂ gebildet. Nach Abzweigung des Pfadrahmenkopfes V5₁₂ entsteht ein Container C-11₂, der nach Entstopfung ein 1544-kbit-Signal am Ausgang A₂ abgeben kann.

Die Zeigerbytes V1₁₂ bis V4₁₂ sind in dieser Übertragungsrichtung aktiv und kennzeichnen den Beginn des VC-11₂-Signals, indem sie auf den Pfadrahmenkopf V5₁₂ hinweisen.

Das Verfahren ermöglicht so die Übertragung des Pfadrahmenkopfes V5 über die 2048-kbit/s-Strecken L₁₁ und L₁₂ hinweg und damit die Überwachung des VC-11₁-Signals und des VC-11₂-Signals von der Quelle bis zur Senke.

Figur 10 zeigt ein Blockschaltbild des Abschnitts A2₁ und der Untersystemeinheit TU-22 in Figur 4 für die Übertragung von 6312-kbit/s-Signalen über 8448-kbit/s-Strecken L₂₁ und L₂₂. Abgesehen von den Bitraten und Taktfrequenzen besteht ein Unterschied gegenüber dem Blockschaltbild nach Figur 8 darin, daß alle Zahlen und Indizes an erster Stelle eine 2 enthalten. Die Wirkungsweise ist gleich.

Figur 11 zeigt ein Blockschaltbild des Abschnitts A1₂ und der Untersystemeinheiten TU-11₁ und TU-11₂ und Figur 12 zeigt schließlich ein Blockschaltbild des Abschnitts A2₂ und der Untersystemeinheiten TU-21₁ und TU-21₂ in Figur 5. Diese Blockschaltbilder unterscheiden sich von denen nach den Figuren 8 und 10 dadurch, daß keine Virtualhilfscontainer benötigt werden, weil keine Stopfbytes FS einzufügen sind.

## Patentansprüche

1. Verfahren zum Ubertragen eines 1544- bwz. 6312-kbit/s-Signals in der Synchron-Digital-Multiplexhierachrchie SDH, bei dem in Multiplexrichtung ein 1544- bzw. 6312-kbit/s-Quellensignal mit einem ersten 2048- bzw. 8448-kHz-Lückentakt (LT₁₁ bzw. LT₁₂) in einen ersten Container (C-11₁ bzw. C-21₁) gestopft wird,
aus dem ersten Container (C-11₁ bzw. C-21₁) und aus einem ersten Pfadrahmenkopf (V5₁₁ bzw. V5₂₁) ein erster Virtualcontainer (VC-11₁₁ bzw. VC-21₁₁) gebildet wird,
aus dem ersten Virtualcontainer (VC-11₁₁ bzw. VC-21₁₁) und aus ersten zeigerbytes (V1₁₁ - V4₁₁ bzw. V1₂₁ - V4₂₁) eine erste Untersystemeinheit (TU-11₁₁ bzw. TU-21₁₁) gewonnen wird,
aus der ersten Untersystemeinheit (TU-11₁₁ bzw. TU-21₁₁) und aus einem ersten Kopf (OH₁₁ bzw. OH₂₁) ein erster Strecken-container (S-11₁₁ bzw. S-21₁₁) gebildet wird,
der erste Streckencontainer (S-11₁₁ bzw. S-21₁₁) über eine 2048-bzw. 8448-kbit/s-Strecke (L₁₁ bzw. L₂₁) übertragen wird, aus dem übertragenen ersten Streckencontainer (S-11₁₂ bzw. S-21₁₂) durch Entnahme des ersten Kopfes (OH₁₁ bzw. OH₂₁) die erste Untersystemeinheit (TU-11₁₂ bzw. TU-21₁₂) wiedergewonnen wird,
durch Ausblendung der ersten Zeigerbytes (V1₁₁-V4₁₁ bzw. V1₂₁-V4₂₁) der erste Virtualcontainer (VC-11₁₂ bzw. VC-21₁₂) wiedergewonnen wird,
**entweder** nach US-Norm der wiedergewonnene erste Virtualcontainer (VC-11₁₂ bzw. VC-21₁₂) in eine netzseitige Untersystemeinheit (TU-11₁ bzw. TU-21₁) eingefugt wird
**oder** nach ETSI-Norm aus dem wiedergewonnenen ersten Virtualcontainer (VC-11₁₂ bzw. VC-21₁₂) und aus ersten Stopf-bytes (FS₁₁ bzw. FS₂₁) ein erster Virtualhilfscontainer (VC-12₁* bzw. VC-22₁*) gebilbet wird und in die netzseitige Untersystemeinheit (TU-12₁ bzw. TU-22₁) eingefügt wird,
in Demultiplexrichtung
**entweder** nach der US-Norm aus einer zweiten Unter-systemeinheit (TU-11₂ bzw. TU21₂) ein Virtualcontainer (VC-11₂₁ bzw. VC-21₂₁) entnommen wird und aus diesem mit einem zweiten 2048- bzw. 8448-kHz-Lückentakt (LT₁₂ bzw. LT₂₂) unter Hinzufugung von zweiten Zeigerbytes (V1₁₂ - V4₁₂ bzw. V1₂₂ - V4₂₂) eine weitere Untersystemeinheit (TU11₂₁ bzw. TU22₂₁) gebildet wird
**oder** nach der ETSI-Norm einer zweiten Untersystemeinheit (TU-12₂ bzw. TU-22₂) ein zweiter Virtualhilfscontainer (VC-12₂* bzw. VC-22₂*) entnommen, aus diesem durch Entnahme von zweiten Stopfbytes (FS₁₂ bzw. FS₂₂) ein zweiter Virtualcontainer (VC-11₂₁ bzw. VC-21₂₁) gebildet wird, aus dem mit dem zweiten 2048- bzw. 8448-kHz-Lückentakt (LT₁₂ bzw. LT₂₂) unter Hinzufugung der zweiten Zeigerbytes (V1₁₂ - V4₁₂ bzw. V1₂₂ -V4₂₂) die weitere Untersystemeinheit (TU11₂₁ bzw. TU22₂₁) gebildet wird,
aus der weiteren Untersystemeinheit (TU11₂₁ bzw. TU22₂₁) mit der Hilfe des zweiten 2048- bzw. 8448-kHz-Lückentaktes (LT₁₂ bzw. LT₂₂) und durch Hinzufugen eines zweiten Kopfes (OH₁₂ bzw. OH₂₂) ein zweiter Streckencontainer (S-11₂₁ bzw. S-21₂₁) gebildet wird,
der zweite Streckencontainer (S-11₂₁ bzw. S-21₂₁) über eine 2048-bzw. 848-kbit/s-Strecke (L₁₂ bzw. L₂₂) ubertragen wird, aus dem ubertragenen zweiten Streckencontainer (S-11₂₂ bzw. S-21₂₂) unter Entnahme des zweiten Kopfes (OH₁₂ bzw. OH₂₂) eine Untersystemeinheit (TU-11₂₂ bzw. TU-21₂₂) gebildet wird, aus der Untersystemeinheit (TU-11₂₂ bzw. TU21₂₂) unter Entnahme der zweiten Zeigerbytes (V1₁₂ - V4₁₂ bzw. V1₂₂ - V4₂₂) der zweite Virtualcontainer (VC-11₂₂ bzw. VC-21₂₂) wiedergewonnen wird,
aus dem wiedergewonnenen zweiten Virtualcontainer (VC-11₂₂ bzw. VC-21₂₂) unter Entnahme des zweiten Pfadrahmenkopfes (V5₁₂ bzw. V5₂₂) ein zweiter Container (C-11₂ bzw. C-21₂) gebildet wird und
aus dem zweiten Container (C-11₂ bzw. C-21₂) unter Entstopfen ein empfangenes 1544- bzw. 6312-kbit/s-Signal entnommen wird.

2. Verfahren nach Anspruch 1,
**dadurch gekennzeichnet,**
daß der erste 2048- bzw. 8448-kHz-Lückentakt (LT₁₁ bzw. LT₂₁) aus einem ersten 2048- bzw. 8448-kHz-Takt (T₁₁ bzw. T₂₁), der aus dem zweiten wiedergewonnenen Streckencontainer (S-11₂₂ bzw. S-21₂₂) abgeleitet wurde, gewonnen wird.

3. Verfahren nach Anspruch 1,
**dadurch gekennzeichnet,**
daß der zweite 2048- bzw. 8448-kHz-Lückentakt (LT₁₂ bzw. LT₂₂) aus dem zweiten 2048- bzw. 8448-kHz-Takt (T₁₂ bzw. T₂₂) gewonnen wird.

4. Verfahren nach Anspruch 1,
**dadurch gekennzeichnet**,
daß in den Lückentakt (LT₁₁, LT₁₂, LT₂₁, LT₂₂) eine Lücke für den Kopf (OH₁₁, OH₁₂, OH₂₁, OH₂₂), für die Zeigerbytes V1₁₁ -V4₁₁, V1₁₂ - V4₁₂, V1₂₁ - V4₂₁, V1₂₂ - V4₂₂ und für den Pfadrahmenkopf V5₁₁, V5₁₂, V5₂₁, V5₂₂ eingefügt wird.

5. Verfahren nach Anspruch 1,
**dadurch gekennzeichnet,**
daß in den Kopf (OH₁₁, OH₁₂, OH₂₁, OH₂₂) als erstes Byte jedes der vier Rahmen (SR1-SR4) der Streckencontainer (S-11₁₁ bzw. S-21₁₁) alternierend ein Rahmenkennungswort (RKW) und ein Meldewort (MW) eingefügt wird.

6. Verfahren nach Anspruch 1,
**dadurch gekennzeichnet,**
daß im Virtualhilfscontainer (VC-12₁* bzw. VC-22₁*, VC-12₂* bzw. VC-22₂*) beginnend mit dem dritten Byte jedes vierte Byte als Stopfbyte (FS₁₁, FS₁₂, FS₂₁, FS₂₂) gewählt wird.

## Claims

1. Method of transmitting a 1544 or 6312 kbit/s signal in the synchronous digital multiplex hierarchy SDH, in which in multiplexing direction a 1544 or 6312 kbit/s source signal is stuffed with a first 2048 or 8448 kHz gap clock (LT₁₁ or LT₁₂) into a first container (C-11₁ or C-21₁), respectively,
a first virtual container (VC-11₁₁ or VC-21₁₁) is formed from the first container (C-11₁ or C-21₁) and from a first path overhead (V5₁₁ or V5₂₁), respectively,
a first tributary mit (TU-11₁₁ or TU-21₁₁) is obtained from the first virtual container (VC-11₁₁ or VC-21₁₁) and from first pointer bytes (V1₁₁-V4₁₁ or V1₂₁-V4₂₁), respectively,
a first link container (S-11₁₁ or S-21₁₁) is formed from the first tributary mit (TU-11₁₁ or TU-21₁₁) and from a first overhead (OH₁₁ or OH₂₁), respectively,
the first link container (S-11₁₁ or S-21₁₁) is transmitted via a 2048 or 8448 kbit/s link (L₁₁ or L₂₁), respectively, the first tributary mit (TU-11₁₂ or TU-21₁₂) is recovered from the transmitted first link container (S-11₁₂ or S-21₁₂) by removing the first overhead (OH₁₁ or OH₂₁), respectively,
the first virtual container (VC-11₁₂ or VC-21₁₂) is recovered by removing the first pointer bytes (V1₁₁-V4₁₁ or V1₂₁-V4₂₁), respectively,
either, according to US standard, the recovered first virtual container (VC-11₁₂ or VC-21₁₂) is inserted into a tributary mit (TU-11₁ or TU-21₁) on the network side, respectively,
or, according to ETSI standard, a first virtual auxiliary container (VC-12₁* or VC-22₁*) is formed from the recovered first virtual container (VC-11₁₂ or VC-21₁₂) and from first stuffing bytes (FS₁₁ or FS₂₁) and inserted into the tributary mit (TU-12₁ or TU-22₁) on the network side, respectively,
in demultiplexing direction
either, according to US standard, a virtual container (VC-11₂₁ or VC-21₂₁) is removed from a second tributary mit (TU-11₂ or TU21₂), respectively, and a further tributary mit (TU11₂₁ or TU22₂₁) is formed from said virtual container (VC-11₂₁ or VC-21₂₁) with a second 2048 or 8448 kHz gap clock (LT₁₂ or LT₂₂) with the addition of second pointer bytes (V1₁₂-V4₁₂ or V1₂₂-V4₂₂), respectively, or, according to the ETSI standard, a second virtual auxiliary container (VC-12₂* or VC-22₂*) is removed from a second tributary mit (TU-12₂ or TU-22₂), respectively, and a second virtual container (VC-11₂₁ or VC-21₂₁) is formed from said virtual auxiliary container (VC-12₂* or VC-22₂*) by removing second stuffing bytes (FS₁₂, or FS₂₂), respectively, and the further tributary mit (TU11₂₁ or TU22₂₁) is formed from said second virtual container (VC-11₂₁ or VC-21₂₁) with the second 2048 or 8448 kHz gap clock (LT₁₂ or LT₂₂) with the addition of the second pointer bytes (V1₁₂-V4₁₂ or V1₂₂-V4₂₂), respectively,
a second link container (S-11₂₁ or S-21₂₁) is formed from the further tributary mit (TU11₂₁ or TU22₂₁) with the aid of the second 2048 or 8448 kHz gap clock (LT₁₂ or LT₂₂) and with the addition of a second overhead (OH₁₂ or OH₂₂), respectively,
the second link container (S-11₂₁ or S-21₂₁) is transmitted via a 2048 or 8448 kbit/s link (L₁₂ or L₂₂), respectively, a tributary mit (TU-11₂₂ or TU-21₂₂) is formed from the transmitted second link container (S-11₂₂ or S-21₂₂) by removing the second overhead (OH₁₂ or OH₂₂), respectively, the second virtual container (VC-11₂₂ or VC-21₂₂) is recovered from the tributary mit (TU-11₂₂ or TU21₂₂) by removing the second pointer bytes (V1₁₂-V4₁₂ or V1₂₂-V4₂₂), respectively,
a second container (C-11₂ or C-21₂) is formed from the recovered second virtual container (VC-11₂₂ or VC-21₂₂) by removing the second path overhead (V5₁₂ or V5₂₂), respectively, and
a received 1544 or 6312 kbit/s signal is removed, with destuffing, from the second container (C-11₂ or C-21₂), respectively.

2. Method according to Claim 1, characterized in that the first 2048 or 8448 kHz gap clock (LT₁₁ or LT₂₁) is obtained from a first 2048 or 8448 kHz clock (T₁₁ or T₂₁), which was derived from the second recovered link container (S-11₂₂ or S-21₂₂), respectively.

3. Method according to Claim 1, characterized in that the second 2048 or 8448 kHz gap clock (LT₁₂ or LT₂₂) is obtained from the second 2048 or 8448 kHz clock (T₁₂ or T₂₂), respectively.

4. Method according to Claim 1, characterized in that a gap is inserted into the gap clock (LT₁₁, LT₁₂, LT₂₁, LT₂₂) for the overhead (OH₁₁, OH₁₂, OH₂₁, OH₂₂), for the pointer bytes V1₁₁-V4₁₁, V1₁₂-V4₁₂, V1₂₁-V4₂₁, V1₂₂-V4₂₂ and for the path overhead V5₁₁, V5₁₂, V5₂₁, V5₂₂.

5. Method according to Claim 1, characterized in that as first byte of each of the four frames (SR1-SR4) of the link containers (S-11₁₁ or S-21₁₁) a frame alignment signal (RKW) and a service word (MW) are inserted alternately into the overhead (OH₁₁, OH₁₂, OH₂₁, OH₂₂).

6. Method according to Claim 1, characterized in that, beginning with the third byte, each fourth byte is selected as stuffing byte (FS₁₁, FS₁₂, FS₂₁, FS₂₂) in the virtual auxiliary container (VC-12₁* or VC-22₁*, VC-12₂* or VC-22₂*, respectively).

## Revendications

1. Procédé de transmission d'un signal à 1544 ou 6312 kbits/s dans le système hiérarchique de multiplexage numérique synchrone SDH, selon lequel, dans le sens du multiplexage, un signal d'origine à 1544 ou 6312 kbits/s est complété par bourrage avec une première cadence d'intervalles vides à 2048 ou 8448 kHz (LT₁₁ ou LT₁₂) dans un premier conteneur (C-11₁ ou C-21₁),
un premier conteneur virtuel (VC-11₁₁ ou VC-21₁₁) est formé à partir du premier conteneur (C-11₁ ou C-21₁) et à partir d'une première en-tête de trame de voie (V5₁₁ ou V5₂₁),
une première unité de sous-système (TU-11₁₁ ou TU-21₁₁) étant obtenue à partir du premier conteneur virtuel (VC-11₁₁ ou VC-21₁₁) et à partir du premier octet vectoriel (V1₁₁-V4₁₁ ou V1₂₁ ou V4₂₁),
un premier conteneur de section (S-11₁₁ ou S-21₁₁) est formé à partir de la première unité de sous-système (TU-11₁₁, TU-21₁₁) et à partir d'une première en-tête (OH₁₁ ou OH₂₁),
le premier conteneur de section (S-11₁₁ ou S-21₁₁) est transmis par l'intermédiaire d'une section à 2048 ou 8448 kbits/s (L₁₁ ou L₂₁),
la première unité de sous-système (TU-11₁₂ ou TU-21₁₂) est récupérée à partir du premier conteneur de section transmis (S-11₁₂ ou S-21₁₂), par prélèvement de la première en-tête (OH₁₁ ou OH₂₁),
le premier conteneur virtuel (VC-11₁₂ ou VC-21₁₂) est récupéré par occultation du premier octet vectoriel (V1₁₁ ou V4₁₁ ou V1₁-V4₂₁),
le premier conteneur virtuel récupéré (VC-11₁₂ ou VC-21₁₂) est inséré, conformément à la norme (US), dans une unité de sous-systèmes (TU-11₁ ou TU-21₁) du côté du réseau, ou bien un premier conteneur auxiliaire virtuel (VC-12₁* ou VC-22₁*) est formé, conformément à la norme TSI, à partir du premier conteneur virtuel récupéré (VC-11₁₂ ou VC-21₁₂) et à partir de premiers octets de bourrage (FS₁₁ ou FS₂₁) et est inséré dans l'unité de sous-système (TU-12₁ ou TU-22₁) située du côté du réseau,
et dans le dispositif de démultiplexage
soit, d'après la norme US, un conteneur virtuel (VC-11₂₁ ou VC-21₂₁) est prélevé d'une seconde unité de sous-système (TU-11₂ ou TU-21₂) et une autre unité de sous-système (TU-11₂₁ ou TU-22₂₁) est formé à partir de ce conteneur virtuel avec une seconde cadence d'intervalles vides à 2048 ou 8448 kHz (LT₁₂ ou LT₂₂) moyennant l'adjonction de seconds octets vectoriels (V1₁₂-V4₁₂ ou V1₂₂-V4₂₂),
soit, selon la norme ETSI, un second conteneur auxiliaire virtuel (VC-12₂*) ou VC-22₂*) est prélevé d'une seconde unité de sous-système (TU-12₂ ou TU-22₂), et un second conteneur virtuel (VC-11₂₁ ou VC-21₂₁) est formé à partir de ce conteneur auxiliaire virtuel par prélèvement de seconds octets de bourrage (FS₁₂ ou FS₂₂), à partir duquel l'autre unité de sous-système (TU11₂₁ ou TU22₂₁) est formée, avec la seconde cadence d'intervalles vides à 2048 ou 8448 kHZ (LT₁₂ ou LT₂₂), moyennant l'adjonction des seconds octets vectoriels (V1₁₂-V4₁₂ ou V1₂₂-V4₂₂),
un second conteneur de section (S-11₂₁ ou S-21₂₁) est formé à partir de la seconde unité de sous-systèmes (TU11₂₁ ou TU22₂₁) à l'aide de la seconde cadence d'intervalles vides à 2048 ou 8448 kHz (LT₁₂ ou LT₂₂) et par adjonction d'une seconde entrée (OH₁₂ ou OH₂₂),
le second conteneur de section (S11₂₁ ou S21₂₁) est transmis par l'intermédiaire d'une section à 2048 ou 8848 kbits/s (L₁₂ ou L₂₂),
l'unité de sous-système (TU-11₂₂ ou TU-21₂₂) est formée à partir du second conteneur de section transmis (S-11₂₂ ou S-21₂₂), moyennant le prélèvement de la seconde entrée (OH₁₂ ou OH₂₂),
le second conteneur virtuel (VC-11₂₂ ou VC-21₂₂) est récupéré à partir de l'unité de sous-système (TU-11₂₂ ou TU-21₂₂) moyennant le prélèvement des seconds octets vectoriels (V1₁₂-V4₂₁ ou V1₂₁-V4₂₂),
un second conteneur (C-11₂ ou C-21₂) est formé à partir du second conteneur virtuel récupéré (VC-11₂₂ ou VC-21₂₂) moyennant le prélèvement de la seconde en-tête de trame de voie (V5₁₂ ou V5₂₂), et
un signal reçu à 1544 ou 6312 kbits/s est prélevé du second conteneur (C-11₁₂ ou C-21₂₂), moyennant la suppression du bourrage.

2. Procédé suivant la revendication 1, caractérisé par le fait que la première cadence d'intervalles vides à 2048 ouo 8448 kHz (LT₁₁ ou LT₂₁) est obtenue à partir de la première cadence à 2048 ou 8448 kHz (T₁₁ ou T₂₁), qui est dérivée du second conteneur de section récupérée (S-11₂₂ ou S-21₂₂).

3. Procédé suivant la revendication 1, caractérisé par le fait que la seconde cadence d'intervalles vides à 2048 ou 8448 kHz (LT₁₂ ou LT₂₂) est obtenue à partir de la seconde cadence à 2048 ou 8448 kHz (T₁₂ ou T₂₂).

4. Procédé suivant la revendication 1, caractérisé par le fait que dans la cadence d'intervalles vides (LT₁₁, LT₂₂, LT₂₁, LT₂₂) est inséré un intervalle vide pour l'en-tête (OH₁₁, OH₁₂, OH₂₁, OH₂₂), pour les octets vectoriels (V1₁₁-V4₁₁, V1₁₂-V4₁₂, V1₂₁-V4₂₁, V1₂₂-V4₂₂) et pour l'en-tête de section de voie (V5₁₁, V5₁₂, V5₂₁, V5₂₂).

5. Procédé suivant la revendication 1, caractérisé par le fait que dans l'en-tête (OH₁₁, OH₁₂, OH₂₁, OH₂₂) sont insérés en alternance, en tant que premier octet de chacune des quatre trames (SR1-SR4) du conteneur de section (S-11₁₁ ou S-21₁₁), un mot caractéristique de trame (RKW) et un mot de signalisation (MW).

6. Procédé suivant la revendication 1, caractérisé par le fait que dans le conteneur auxiliaire virtuel (VC-12₁* ou VC-22₁*, VC-12₂* ou VC-22₂*), chaque quatrième octet est sélectionné, en commençant avec chaque troisième octet, en tant qu'octets de bourrage (FS₁₁, FS₁₂, FS₂₁, FS₂₂).
